(19)

Europäisches
Patentamt
European
Patent Office
Office européen
des brevets

(11) **EP 2 660 766 A1**

(12) **EUROPEAN PATENT APPLICATION**

(43) Date of publication:
**06.11.2013 Bulletin 2013/45**

(51) Int Cl.:
***G06Q 30/06*** *(2012.01)*

(21) Application number: **12166373.6**

(22) Date of filing: **02.05.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ST-Ericsson SA**
**1228 Genève (CH)**

(72) Inventors:
• **Fagerström, Mats**
**212 36 Malmö (SE)**

• **Anyuru, Andreas**
**224 74 Lund (SE)**
• **Bergström, Mats**
**211 57 Malmö (SE)**
• **Björkengren, Ulf**
**237 34 Bjärred (SE)**
• **Pörscke, Benn**
**254 44 Staffanstorp (SE)**
• **Ryd, Patrik**
**233 38 Svedala (SE)**

(74) Representative: **Valea AB**
**Anna Lindhs Plats 4**
**211 19 Malmö (SE)**

(54) **A service provider node, a method therein, and a computer program product**

(57)    A service provider node 101, and a method therein, for transmitting data packets relating to parts of a service to a communication device 102. The service provider node and the communication device are communicatively connected over a communications network 104 and comprised in a communications system 100. The method comprises receiving 205,302 a signal S1, which signal comprises an identifier of the communication device requesting a service, an identifier of the requested service, and an agreement comprising information about a previously agreed part of the service. The method comprises further agreeing 303 on an upcoming part of the service requested by the communication device, while transmitting 206,304 data packets relating to the previously agreed part of the service to the communication device, wherein the data packets are transmitted in dependence of the received signal.

FIG. 3

EP 2 660 766 A1

**Description**

TECHNICAL FIELD

Embodiments herein relate to a service provider node, a method therein, and to a computer program product. Especially, embodiments relate to the transmission of data packets relating to parts of a service to the communication device.

BACKGROUND

Today, there exist several ways a customer using an Internet service can pay the service provider for the service provided. For example, the customer can enter his/hers credit card number on the service provider's web page, whereby payment can be accomplished by withdrawing the cost for the service from the bank account associated with the credit card number. Further, the customer can pay for the service by paying an invoice received from the service provider after he/she has consumed the Internet service. Furthermore, the customer can also use a safe online money transfer service, such as PayPal™, to pay for the Internet service.

However, according to the available payment solutions, the customer either agrees on payment and pays in advance, i.e. before receiving the service, or agrees on payment in advance but pays afterwards, i.e. when the service has been completed.

A drawback with agreeing on the payment in advance is that the two parties, i.e. the customer and the service provider, basically agree to a non-revocable contract for the complete service session before the session is started. In some scenarios, when the quality of the service session does not meet the customer's expectations, the customer cannot simply terminate the service session and expect to get the non-used part of the service session refunded or reduced from the invoice to pay, at least not without an effort to convince the service provider that the agreement should be breached. Further, other reasons for terminating the service session prematurely may exist, for reasons originating from either the customer or the service provider. In all cases, it is most likely that the customer would be in a better mood, if he does not have to pay for the unused part of the service session or to start some kind of legal process to get refunded.

Further, the current payment solutions also constitute practical thresholds that prevent spontaneous and/or small business transactions on the Internet.

SUMMARY

An object of embodiments herein is to provide a way of improving performance in a communications system.

According to a first aspect of embodiments herein, the object is achieved by a method in a service provider node for transmitting data packets relating to parts of a service to a communication device.

The service provider node and the communication device are communicatively connected over a communications network and comprised in a communications system.

The service provider node receives a signal, which signal comprises an identifier of the communication device requesting a service, an identifier of the requested service, and an agreement comprising information about a previously agreed part of the service.

Further, the service provider node agrees with the communication device on an upcoming part of the service requested by the communication device, while transmitting data packets relating to the previously agreed part of the service to the communication device, wherein the data packets are transmitted in dependence of the received signal.

According to a second aspect of embodiments herein, the object is achieved by a service provider node for transmitting data packets relating to parts of a service to a communication device.

The service provider node and the communication device are communicatively connected over a communications network and comprised in a communications system.

The service provider node comprises a receiving circuit configured to receive a signal, which signal comprises an identifier of a communication device requesting a service, an identifier of the requested service, and an agreement comprising information about a previously agreed part of the service.

The service provider node further comprises an agreeing circuit configured to agree with the communication device on an upcoming part of the service requested by the communication device, while a transmitting circuit comprised in the service provider node transmits data packets relating to the previously agreed part of the service to the communication device in dependence of the received signal.

According to a third aspect of embodiments herein, the object is achieved by a computer program product for providing data packets relating to parts of a service to a communication device. The computer program product is loadable into a memory of a computerized device and comprises software code portions adapted to perform one or more of the actions described herein and/or to realize one or more of the features described herein.

Since the service provider node agrees with the communication device on an upcoming part of the service requested by the communication device, while transmitting data packets relating to the previously agreed part of the service to the communication device, services may be provided in the communication system in a more flexible manner.

This means that the transmittal of data packets may be terminated by for example a client using the communication device at any time without risking to lose the total cost agreed upon for the total service as in the prior art system.

Further, the client may, by means of the communication device, first agree on some parts of the service, and then if for example the quality of the service parts were good, the client may, by means of the communication device, agree on upcoming parts while the service provider node transmits the data packets relating to the previously agreed part to the communication device.

By providing services in a more flexible way, an improved performance in the communications system is obtained.

An advantage of embodiments herein is that the client may, by means of the communication device, interrupt the service at any point and be confident that he only has to pay for the amount of service he consumed. There might be several reasons to why the client wants to interrupt a service. For example, the client might not be satisfied with the quality of the service. If the service is an on-demand audio and video service, the client may be unsatisfied with the audio and/or video quality. As another example, if the service is a movie, the client may not like the content of the film, or the client does not know how long time he is able to use the service and therefore he may want to be confident that he only has to pay for the amount of service he consumed.

A further advantage of embodiments herein is that they provide for the service provider node to get paid for minor services or trials in a way that will make it easier to reach new clients. The clients may be able to test new services and new service providers without any considerable risk as the initial charge may be very small.

A yet further advantage of embodiments herein is that they provide for lowering of the threshold for business transactions in the communications network, e.g. the Internet. This may be of particular interest for the growth of streaming services, since the client only pays for what he consumes and may switch between different service providers very quickly and without any overhead cost.

A further advantage of embodiments herein is that the client may be anonymous to the service provider.

A further advantage of embodiments herein is that the quality of service may be renegotiated during the service session since the contract between the client and service provider is not for the entire service session. For example, the client may change from a lower video resolution to a higher video resolution during an ongoing service session and the payment would then adapt.

A yet further advantage of embodiments herein is that the service provider can replace a trial/preview service session and instead get paid for it.

A further advantage of embodiments herein is that the price may be changed dynamically during the service session if for example this is part of the initial agreement between the client and the service provider. For example, the price may be increased if there is a huge load on the service provide node. The price may be lowered during less interesting parts of the service session, for example during breaks in a football game.

BRIEF DESCRIPTION OF THE DRAWINGS

Examples of embodiments herein are described in more detail with reference to attached drawings in which:

Figure 1 is a schematic block diagram illustrating embodiments of a communications system;
Figure 2 is a flowchart depicting embodiments of a method in a communications system;
Figure 3 is a flowchart depicting embodiments of a method in a service provider node;
Figure 4 is a schematic block diagram illustrating embodiments of a service provider node;
Figure 5 is a schematic combined flow scheme and block diagram illustrating embodiments of a communications system;
Figure 6 is a schematic combined flow scheme and block diagram illustrating embodiments of a communications system; and
Figure 7 is a schematic combined flow scheme and block diagram illustrating embodiments of a communications system.

DETAILED DESCRIPTION

Embodiments herein will be exemplified in the following non-limiting description.

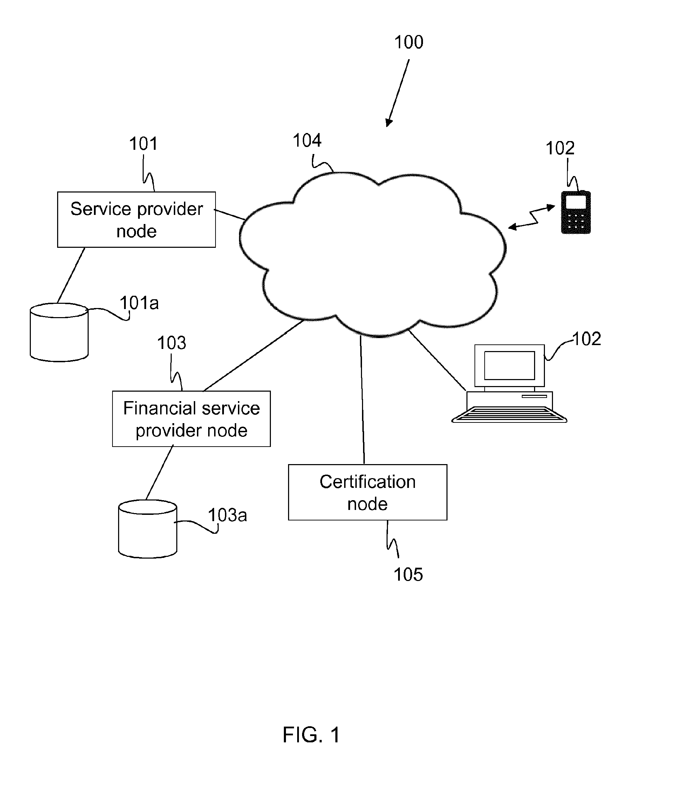

**Figure 1** is a schematic overview of embodiments of **a communications system 100.**

The communications system 100 comprises **a service provider node 101.** The service provider node 101 may be a portable or stationary service provider device, such as a mobile terminal or a wireless terminal, a mobile phone, a computer such as e.g. a laptop, a tablet pc such as e.g. an iPad™, a Personal Digital Assistant (PDA), or any other communication network unit capable to communicate over a communications network.

In this description reference is made to a service provider node 101. However, it should be understood that in some embodiments, the service provider node 101 is realized by a service provider data node (not shown) and a service provider control node (not shown). The service provider data node and the service provider control node may be both physically and logically separated. Further, the service provider data node may be configured to handle the data plane, e.g. to handle data contents of the service. The service provider control node may be configured to handle the control plane, e.g. to control the data flow of the service.

**A storage device 101a** may be comprised in the communications system 100. The storage device 101 a may be connected to or comprised in the service provider node 101. The storage device 101a may be configured to store information relating to e.g. services and clients.

By the term "client", when used herein, is meant a consumer of the service or of a part of the service. Sometimes herein reference is made only to the client. However, it should be understood that the client performs operations, and communicates and interacts with components of the communications system 100, by means of a communication device (which will be described below).

Further, the communications system 100 comprises **at least one communication device 102**. The communication device 102 may be a portable or stationary communication device, such as a mobile terminal or a wireless terminal, a mobile phone, a computer such as e.g. a laptop, a tablet pc such as e.g. an iPad™, a Personal Digital Assistant (PDA), or any other communication network unit capable to communicate over a communications network.

In this description reference is made to a communication device 102. However, it should be understood that in some embodiments, the communication device 102 is realized by a communication data node (not shown) and a communication control node (not shown). The communication data node and the communication control node may be both physically and logically separated. Further, the communication data node may be configured to handle the data plane, e.g. to handle data contents of the service. The communication control node may be configured to handle the control plane, e.g. to control the data flow of the service.

**A financial service provider node 103** is also comprised in the communications system 101. The financial service provider node 103 may be a Trusted Third Party (TTP), e.g. a financial service provider node with which both the service provider, by means of the service provider node 101, and the client, by means of the communication device 102, are authorized to execute financial transaction with.

In this description reference is made to a financial service provider node 103. However, it should be understood that in some embodiments, the financial service provider node 103 is realized by a financial service provider data node (not shown) and a financial service provider control node (not shown). The financial service provider data node and the financial service provider control node may be both physically and logically separated. Further, the financial service provider data node may be configured to handle the data plane, e.g. to handle data contents of the financial service. The financial service provider control node may be configured to handle the control plane, e.g. to control the data flow of the financial service.

Further, **a storage device 103a** may be comprised in the communications system 100. The storage device 103a may be connected to or comprised in the financial service provider node 103. The storage device 103a may be configured to store information relating to e.g. services, service providers and clients.

By the term "service provider", when used herein, is meant a provider of the service or of a part of the service. The service may be produced by the service provider or it may be produced by another party and provided by the service provider. Sometimes herein reference is made only to the service provider. However, it should be understood that the service provider performs operations, and communicates and interacts with components of the communications system 100, by means of the service provider node 101.

The communications system 100 comprises further **a communications network 104**. The communications network 104 may comprise a radio communications network, the Internet, a Local Area Network (LAN), a Wide Area Network (WAN), a Personal Area Network (PAN) etc. By means of the communications network 104, the service provider node 101, the communication device 102 and the financial service provider node 103 may be arranged in communication with each other.

**A certification node 105** may be comprised in the communications system 100. The certification node 105 may be configured to communicate with the service provider node 101, the communication device 102 and/or the financial service provider node 103 over the communications network 101. The certification node 105 may be or comprise a Certificate Authority (CA) node. Further, the certification node 105 may provide a Public Key infrastructure (PKI).

By embodiments described herein, a single agreement between a client and a service provider for an entire service session is replaced by a plurality of agreements, each for a small part of the service session. Further, each of the plurality of agreements is agreed upon continuously in real-time during an ongoing service session.

The expression "agree upon continuously in real-time during the ongoing service session", when used herein, is to be understood as the service provider node 101 and the communication device 102 are agreeing on a new part of the service while the service provider node 101 transmits a previously agreed part to the communication device 102.

By means of the communication device 102, the client may repeatedly send a signal S1 to the service provider node 101. However, as will be described below, the signal S1 may be repeatedly sent to the service provider node 101 from the financial service provider node 103 upon request from the communication device 102. The signal S1 confirms and seals the agreement. Thus, the agreement may not later be repudiated by the client. For each signal S1 received by the service provider node 101, the client will continue to get access to those parts of the service that have been agreed upon.

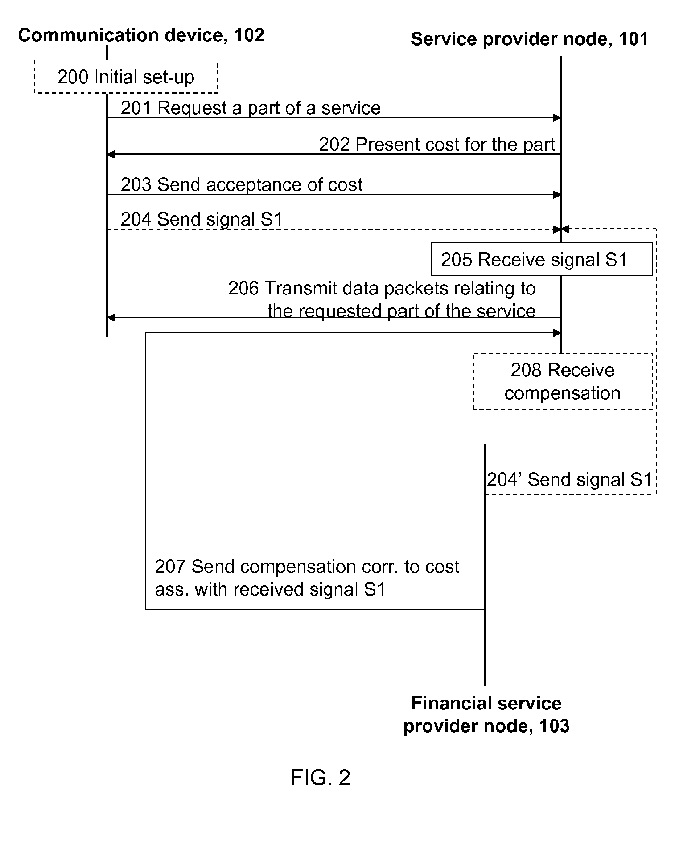

**Figure 2** is a **flowchart depicting embodiments of a method** in communication system 100. As previously mentioned, the communications system 100 comprises the service provider node 101, the communication device 102, the financial service provider node 103, and a communications network 104 over which the service provider node 101, the communication device 102, and the financial service provider node 103 communicate with each other.

Actions for transmitting data packets relating to parts of a service to the communication device 102 will now be described in more detail. The actions may be executed in an order different from that stated below and may also be combined.

**Action 200**

The communication device 102 may perform an initial set-up process. In the initial set-up process, the client may, by means of the communication device 102, select one or more configurations to be applied for one or more services.

One or more different configurations may be published by the service provider node 101. The one or more different configurations may for example be available for selection via the service provider's web page.

The service provider node 101 may present the configuration in a human readable form on the web page that the service provider controls. However, the configuration may also be presented in a machine readable way, e.g. by using Extensible Markup Language (XML), so the client's communication device 102 by means of a computer program, reads the configurations and selects a specific configuration. The configuration may be automatically read and selected by means of the computer program.

As an example, the client's communication device 101 may be set up to always select the cheapest configuration alternative.

The configuration may comprise a cost of the service.

By means of the communication device 102, the client selects the configuration alternative that the client wants to purchase. The configuration alternative may be selected as an initial configuration alternative. In a very simple example, when the service is a movie clip, three configuration alternatives may be available, which three configuration alternatives will be exemplified in the three tables 1-3 below.

Table 1. Configuration alternative 1

| **Configuration alternative No.** | **1** |
|---|---|
| Video Resolution | 480x320 pixels |
| Audio Quality | Low |
| Subtitles | NOT INCLUDED |
| Price per service part | PREDETERMINED: 0.2 coins/time unit (or data unit) |

Table 2. Configuration alternative 2

| **Configuration alternative No.** | **2** |
|---|---|
| Video Resolution | 1280x720 pixels |
| Audio Quality | Medium |
| Subtitles | INCLUDED |
| Price per service part | PREDETERMINED: 0.8 coins/time unit (or data unit) |

Table 3. Configuration alternative 3

| Configuration alternative No. | 3 |
|---|---|
| Video Resolution | 1280x720 pixels |
| Audio Quality | High |
| Subtitles | INCLUDED |
| Price per service part | VARIABLE: 0.6 START coins/time unit (or data unit) |

As exemplified in the tables 1 and 2, by the configuration alternatives 1 and 2, the service provider may offer the movie clip service with a predetermined cost per service part. In the configuration alternative 1, the cost per service part is 0.2 coins per time unit. However, the cost per service part may also be expressed as a cost per data unit as indicated in table 1. Further, as exemplified in table 3, the service provider may offer the service with a variable cost per service part.

In some embodiments, agreement changes of a configuration alternative with the variable part cost may only be initiated by the service provider by means of the service provider node 101.

In some embodiments, agreement changes of a configuration alternative may be initiated by the client, by means of the client's communication device 102, or by the service provider, by means of the service provider node 101.

It may be desirable for the client to be able to know whether or not only he is allowed to change the agreement, or if also the service provider is allowed to make changes. This may be set in an initial agreement, typically executed before the service session is started.

Calculations of the predetermined cost per service part and of the variable cost per service part will now be described.

Predetermined cost per service part

In the predetermined cost per service part alternative a cost is calculated for each equally sized service part using a predefined equation. Further, the cost per service may be associated with a certain quality aspect of the service. The client may select between several cost/service quality alternatives, as exemplified in tables 1-2 above.

In some embodiments, the client and the service provider agree on the configuration alternative during the initial setup and the same cost per service is then kept for all parts during the service session.

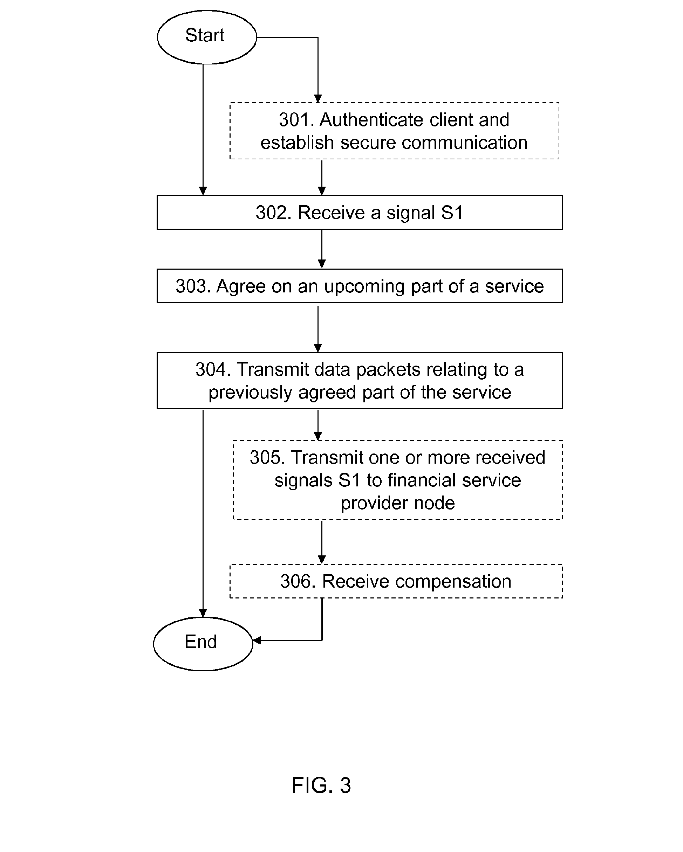

However, the agreement during initial setup may be seen as an initial base agreement. When the service starts, the client's communication device 102 and the service provider's service provider node 101 may continuously in real-time agree on upcoming parts, e.g. upcoming small parts, of the service session while the service provider node 101 provides previously agreed service parts to the communication device 102. This will be described in more detail below with reference to e.g. Figures 2 and 3.

In some embodiments, the cost for one service part may be calculated by the following equations:

$$\textit{Number of service parts} = (\,(\textit{total service time})\,/\,(\textit{service part interval})\,) \quad (\text{eq. 1})$$

$$\textit{Cost per service part} = (\,(\textit{total service cost})\,/\,(\textit{number of service parts})\,) \quad (\text{eq. 2})$$

In equation 1, the *number of service parts* is the number of parts the service is divided into and the *total service time* is the time of the total service. For example, when the service is a video service, the total time of the service may be the length in time of the video. Further, in equation 1, the *service part Interval* is how often a signal S1 may be generated by the communication device 102 and sent to the service provider node 101.

In equation 2, the *total service cost* is the total cost for the service.

It should be understood that the number of service parts may be calculated as:

$$\textit{Number of service parts} = (\,(\textit{total data of service})\,/\,(\textit{service part interval})\,) \quad (\text{eq. 3})$$

In equation 3, the *total data of service* is the total amount of data of the service. The amount of data may be expressed in bytes.

However, it should be understood that a combination of the total service time and the total data of service may be used. For example, the payment may be based on time slots until a fixed, e.g. predetermined, level of data is reached, after which an additional cost relating to the amount of data is added to the cost per time slot.

Example 1: Calculation of predetermined cost per service part

Assume that the client wants to view a movie that is 120 minutes long and the service provider wants to have 12 coins for the complete movie. Further, assume a service part is generated once per second. Then, the number of parts is calculated as *Number of parts* = [120 min x (60s/min)] / 1 = 7200, and the cost per service is calculated as *Cost per service* = (12 / 7200) = 1/600. Thus, according to this example, one service part costs 1/600 coins.

Variable cost per service part

In the variable cost per service part alternative, the cost per service part is calculated in a similar manner as described above, with the difference that the cost varies, cf. e.g. table 3 above.

In some embodiments, the cost varies over time, over the amount of data transferred, or over the amount of data to be transferred. The cost may also vary in dependence of the number of clients, or of the client's status, e.g. whether or not the client is a premium client to have certain benefits. Another example may be an on-line backup service, wherein the cost for the client relates to the amount of data being received by the service provider and wherein this cost may depend on the time of the day in such a way that the cost is lower when the service provider experiences lower data traffic.

If the cost varies in dependence of the number of clients, several alternatives may exist. In a first alternative, the service provider may have a fixed cost for providing the service no matter how many clients the service provider provides it to. In such case, the service provider may lower the cost per fragment in real-time depending on how many clients use the service. In a second alternative, the service provider has a fixed amount of resources, such as bandwidth or processing capacity serving the clients. In such case, the service provider may want to decrease the cost per fragment for points in time when not many clients are connected and to increase the cost per fragment for points in time when many clients are connected.

For the client, an advantage with variable cost per service alternative is that the cost may be lower than the cost per service part in the predetermined case. Comparison may be made to a variable interest rate versus fixed interest rates that a bank provides.

For the service provider, an advantage with the variable cost per service alternative is that, when the service provider has a base cost for the service and when several clients use the service at the same time, the base cost may be shared among the clients.

Another advantage for the service provider is that, when the service provider is "buying" the service from a sub-service provider in real-time and when the sub-service provider has a variable cost per service part versus the service provider, the service provider may vary cost in real-time versus its clients as well.

In some embodiments, the variable cost per service part may be combined with an upper cost per service part limit. In such embodiments, the client may pay a higher cost per service part as compared to embodiments comprising a pure variable cost per service part alternative, but the client will have an insurance that the cost per service part cost will never go over the upper cost per service part limit.

An exemplifying embodiment comprising the variable cost per service part alternative will be described in more detail below.

**Action 201**

The communication device 102 transmits a request for a part of a service to the service provider node 101.

The service may be any kind of service that may be split up in parts. For example, the service may be one or more of a video service; an audio service, such as a music service; an online gaming service; a real-time data service such as stock information; football scores; real-time weather forecasts; an e-book service, a telephony service, and a backup service where the client pays for the amount of data the client backups to e.g. a server.

A service that continues over a certain period of time, such as video or music services, or online gaming services, may be split up into parts of a predefined or predetermined sub-period of time.

However, other services may be split up in dependence of the amount of the service. For example, e-book services may be split up into parts comprising a predefined or predetermined number of pages. However, other services may be divided into parts in dependence of the total data amount of the service. For example, a data backup service may be divided into parts of data to backup to e.g. a server.

It should be understood that the service is not restricted to a type where there is a data flow from the service provider node 101 to the client's communication device 102, e.g. a video streaming service. The data flow relevant for the service may as well be a bi-directional service, i.e. a service wherein the data flow may flow from the service provider node 101 to the communication device 102 as well as form the communication device 102 to the service provider node 101. One example of a bi-directional service is a telephony service.

**Action 202**

The service provider node 101 presents a cost for the part of the service to the communication device 102.

**Action 203**

The communication device 102 transmits an acceptance of a presented cost to the service provider node 101.

**Action 204**

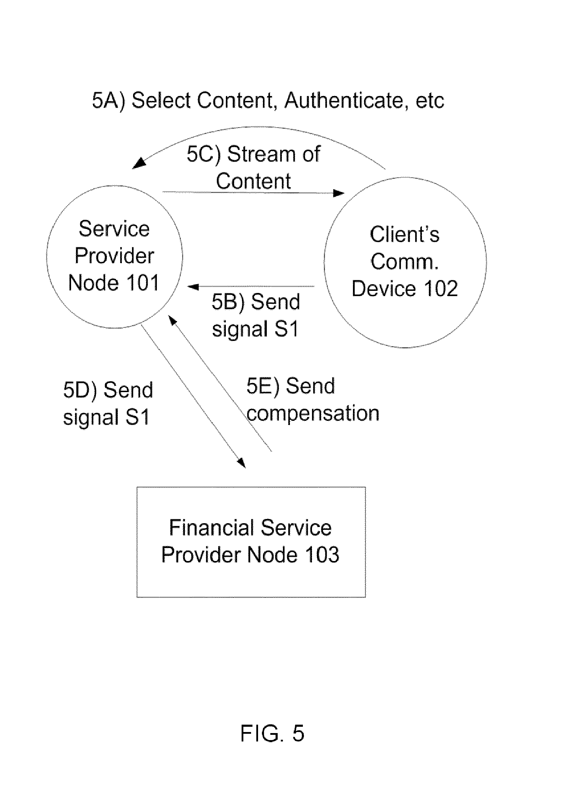

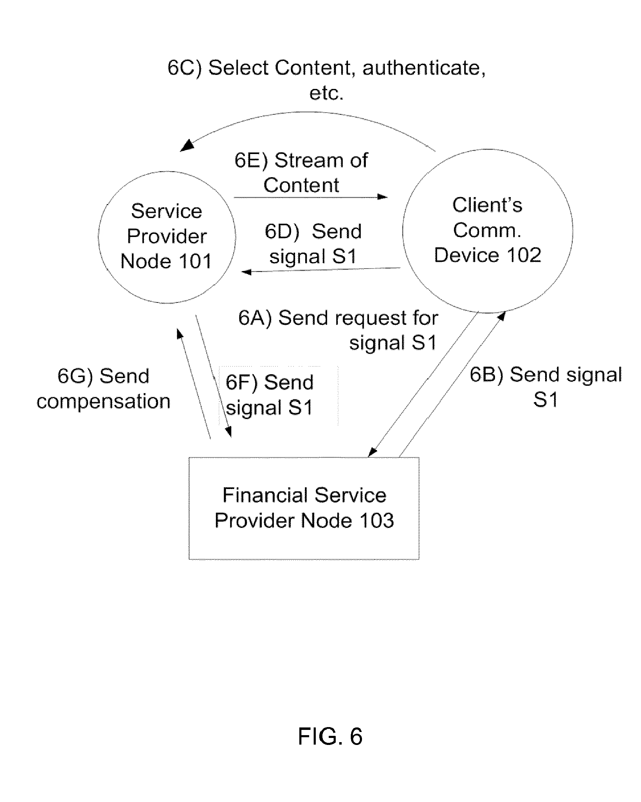

The communication device 102 transmits a signal S1 to the service provider node 101. This will be exemplified below with reference to Figures 5 and 6.
The signal S1 comprises an identifier of the communication device 102 requesting a service, an identifier of the requested service, and an agreement comprising information about a previously agreed part of the service.
The signal S1 may further comprise an identifier of a financial service provider node 103, an identifier of one or more previously received signal S1 and/or a digital signature generated based on the information comprised in the signal S1.
In order to prevent the signal S1 from being repudiated, technologies using e.g. a smart card, such as an Universal Integrated Circuit Card (UICC), or a secure execution environment, may be used to create the signal S1 in a secure manner.

**Action 204'**

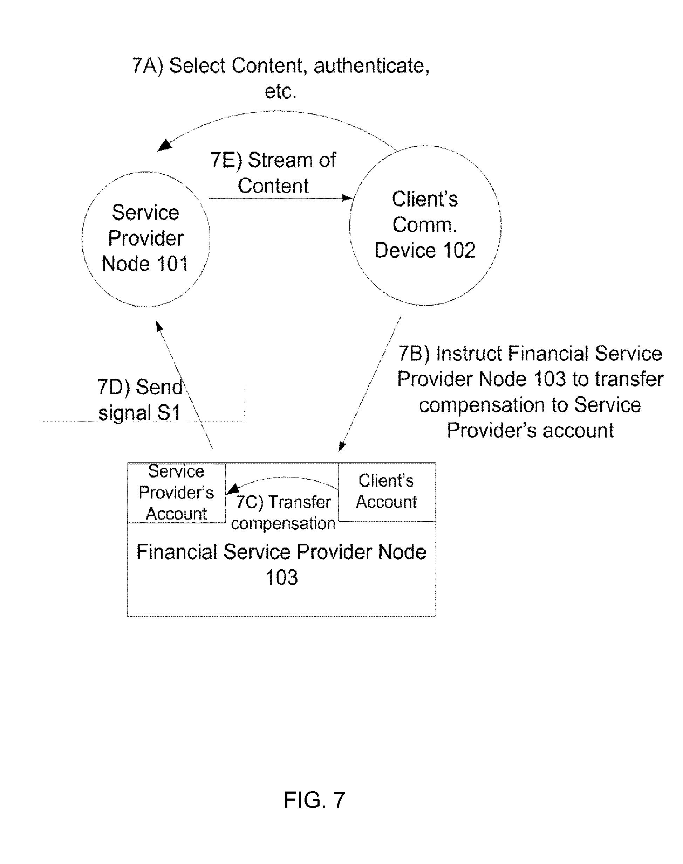

Alternatively, the signal S1 may be transmitted from the financial service provider node 103 to the service provider node 101. This will be exemplified below with reference to Figure 7.
In some embodiments, the actions 203 and 204, or actions 203 and 204' are combined. In such embodiments, the signal S1 comprises the acceptance of the cost.

**Action 205**

The service provider node 101 receives the signal S1.

**Action 206**

The service provider node 101 transmits one or more data packets relating to the requested part of the service to the communication device 102, while the service provider node 101 and the communication device 102 are agreeing on upcoming parts of the service.
The one or more data packets are transmitted in dependence of information comprised in the received signal S1.

**Action 207**

The financial service provider 103 transfers compensation to the service provider node 101. The compensation may correspond to the cost associated with one or more signals S1 received by the service provider node 101.

**Action 208**

The service provider node 101 may receive the compensation.
In some embodiments, the service provider node 101 may receive a notice that the compensation has been transferred to an account, e.g. a bank account, associated with the service provider node 101. This will be exemplified with reference to Figure 7.
**Figure 3** is **a flowchart depicting embodiments of a method** in the service provider node 101. As previously mentioned, the service provider node 101 and the communication device 102 are comprised in the communications system 100, and communicatively connected over the communications network 104.

Actions for transmitting data packets relating to parts of a service to the communication device 102 will now be described in more detail. The actions may be executed in an order different from that stated below and may be combined.

**Action 301**

In some embodiments, the service provider node 101 authenticates the communication device 102 and establishes a secure communication with the communication device 102.

The authentication of the communication device 102 and the establishment of a secure communication with the communication device 102 may comprise that the service provider node 101 receives, from the communication device 102, a digital certificate generated by a certification node 105. The certification node 105 is comprised in the communications system 100 and communicatively connected to the communications network 101. The service provider node 101 verifies the received digital certificate and verifies that a user of the communication device 102 is a correct owner of the digital certificate by running a challenge-response sequence. Further, the service provider 101 establishes the secure communication to the communication device 102.

The certification node 105 may be a Certificate Authority node, CA node. Further, the certification node 105 may provide a Public Key infrastructure (PKI).

**Action 302**

The service provider 101 receives the signal S1.

As previously mentioned, the signal S1 comprises an identifier of the communication device 102 requesting a service, an identifier of the requested service, and an agreement comprising information about a previously agreed part of the service.

In some embodiments, the service provider node 101 receives the signal S1 from the communication device 102. This will be exemplified with reference to Figures 5 and 6.

In some embodiments, the service provider node 101 receives the signal S1 from the financial service provider node 103, whereby the service provider node 101 may be guaranteed that the received signal S1 is backed up by a monetary value. This will be exemplified with reference to Figure 7.

The received signal S1 may further comprise an identifier of the financial service provider node 103, an identifier of one or more previously received signals S1 and/or a digital signature generated based on the information comprised in the signal S1.

This action relates to action 205.

**Action 303**

The service provider node 101 agrees on an upcoming part of the service requested by the communication device 102.

In some embodiments, the service provider node 101 receives a request for the upcoming part of the service from the communication device 102. This relates to action 201 above, wherein it is stated that the communication device 102 transmits a request for a part of a service to the service provider node 101.

The request may comprise a selected variant of the upcoming part of the service. The selected variant may relate to a configuration alternative. When used herein "variant of the upcoming part of the service" is to be understood to mean a variant of a service parameter such as a variant of a resolution, a variant of a sound quality, a variant of a visual angle or a language variant, just to mention some examples of variants of service parameters.

A variant of a resolution may be a 480x320 pixels resolution and another may be a 1280x720 pixels resolution.

A variant of a sound quality may be a stereo quality or a surround sound quality such as 5.1.

A variant of a visual angle may be a specific visual angle provided by a camera. In for example a sports event, several cameras may be arranged to provided several visual angles of the event, and one variant of the visual angle may be provided by one of the cameras.

A language variant may be the English language, the Swedish language, or another language.

In some embodiments, the service provider node 101 receives a request for the upcoming part of the service from the communication device 102, presents a cost for the requested upcoming part to the communication device 102, and receives an acceptance of the presented cost from the communication device 102. This relates to actions 201, 202, and 203.

The service provide node 101 may continuously agree on upcoming parts of the service, while simultaneously transmitting data packets relating to previously agreed parts of the service to the communications device 102, as will be described in action 304 below.

The cost for the requested upcoming part of the service may, for example, vary in dependence of a quality the requested upcoming part, a size of the requested upcoming part, a point in time for the requested upcoming part in relation to the total time for the service, and/or in dependence of a user of the communication device 102, i.e. of the client, requesting the upcoming part.

**Action 304**

While agreeing on the upcoming part of the service as described in action 303, the service provider node 101 transmits data packets relating to the previously agreed part of the service to the communication device 102. The data packets are transmitted in dependence of the received signal S1.
This action relates to action 206.

**Action 305**

In some embodiments, when the service provider node 101 has received the signal S1 from the communication device 102 as described in action 302, the service provider node 101 transmits one or more received signals S1 to the financial service provider node 103. This is performed to receive compensation for the parts of services that have been provided.
This action relates to actions 207 and 208.

**Action 306**

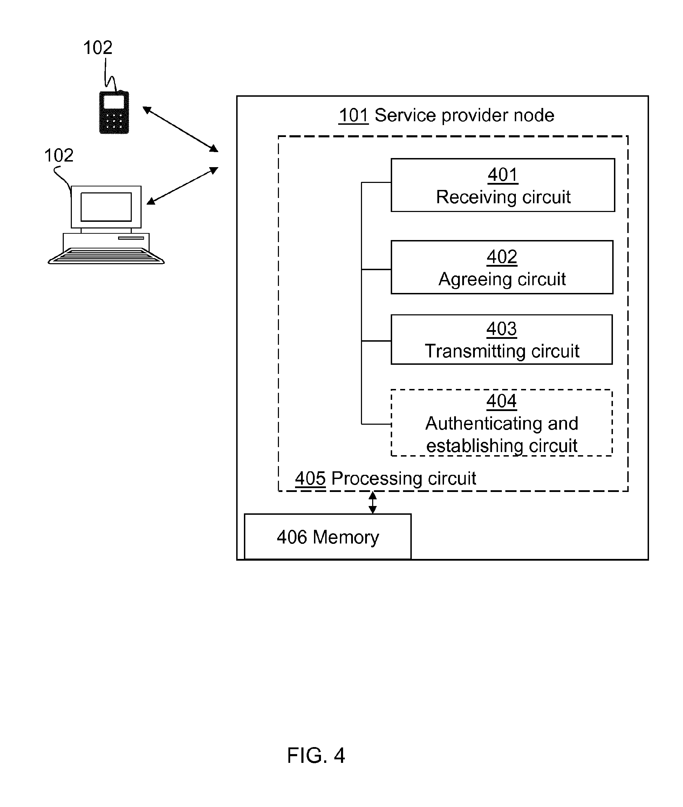

The service provider node 101 receives compensation from the financial service provider node 103. The compensation corresponds to the cost associated with one or more received signals S1.
This action relates to actions 207 and 208.
To perform the method actions in the service provider node 101 described above for transmitting data packets relating to parts of a service to the communication device 102, the service provider node 101 comprises the following arrangement depicted in **Figure 4.**
As previously mentioned the service provider node 101 and the communication device 102 are communicatively connected over the communications network 104 and comprised in the communications system 100.
The service provider node 101 comprises **a receiving circuit 401** configured to receive the signal S1.
As previously mentioned, the signal S1 comprises an identifier of the communication device 102 requesting a service, an identifier of the requested service, and an agreement comprising information about a previously agreed part of the service.
The signal S1 may further comprise an identifier of a financial service provider node 103, an identifier of one or more previously received signal S1 and/or a digital signature generated based on the information comprised in the signal S1.
The receiving circuit 401 may further be configured to receive a compensation from the financial service provider node 103 connected to the communications network 104 and comprised in the communications system 100.
The compensation may correspond to a cost associated with one or more received signals S1.
The cost for the requested upcoming part of the service may vary, for example, in dependence of a quality of the requested upcoming part, a point in time for the requested upcoming part in relation to the total time for the service, and/or in dependence of a user of the communication device 102, i.e. of the client, requesting the upcoming part.
In some embodiments, the receiving circuit 401 is further configured to receive the signal S1 from the communication device 102. This will be exemplified below with reference to Figures 5 and 6.
In some embodiments, the receiving circuit 401 is further configured to receive the signal S1 from the financial service provider node 103, whereby the service provider node 101 may be guaranteed that the received signal S1 is backed up by a monetary value. This will be exemplified below with reference to Figure 7.
The service provider node 101 comprises further **an agreeing circuit 402** configured to agree on an upcoming part of the service requested by the communication device 102, while **a transmitting circuit 403** comprised in the service provider node 10 transmits data packets relating to the previously agreed part of the service to the communication device 102 in dependence of the received signal S1.
The agreeing circuit 402 may be configured to receive a request for the upcoming part of the service from the communication device 102. The request may comprise a selected variant of the upcoming part of the service.
Further, the agreeing circuit 402 may be configured to receive a request for the upcoming part of the service from the communication device 102, to present a cost for the requested upcoming part to the communication device 102, and to receive an acceptance of the presented cost from the communication device 102.

In some embodiments, the agreeing circuit 402 is configured to continuously agree on an upcoming part of the service. In such embodiments, the transmitting circuit 403 may be configured to simultaneously transmit data packets relating to the previously agreed part of the service to the communication device 102.

In some embodiments, when e.g. the receiving circuit 401 has received the signal S1 from the communication device 102, the transmitting circuit 403 may be configured to transmit one or more received signals S1 to the financial service provider node 103.

The service provider node 101 may further comprise **an authenticating and establishing circuit 404** configured to authenticate the communication device 102 and to establish a secure communication with the communication device 102.

In order to authenticate the communication device 102 and to establish a secure communication with the communication device 102, the authenticating and establishing circuit 404 may be configured to receive, from the communication device 102, a digital certificate generated by a certification node 105 comprised in the communications system 100 and communicatively connected to the communications network 101. Further, the authenticating and establishing circuit 404 may be configured to verify the received digital certificate, to verify that a user of the communication device 102 is a correct owner of the digital certificate by running a challenge-response sequence, and to establish the secure communication to the communication device 102.

In some embodiments, the authenticating and establishing circuit 404 is further configured to assist the communication device 102 in the initial set-up process described in action 200.

Embodiments herein for transmitting data packets relating to parts of a service to the communication device 102 may be implemented through one or more processors, e.g. microprocessor, such as **a processing circuit 405** comprised in the service provider node 101 depicted in Fig. 4, together with computer program code for performing the functions and/or method actions of embodiments herein.

The service provider node 101 may further comprise **a memory 406**. The memory may comprise one or more memory units and may be used to store e.g. information relating to services, clients, communication devices 102, financial service providers 103, etc.

Further, embodiments herein do also relate to a computer program product with program code portions for carrying out one or more of the actions and/or or realizing one or more of the features described herein, when executed in a processing unit.

Embodiments herein will now be exemplified with reference to the non-limiting Figures 5-7, which are schematically combined flow schemes and block diagrams illustrating embodiments of the communications system 100.

In figure 5, the signal S1 is created by the client by means of the communication device 102. The signal S1 may constitute the proof of a service agreement. Some embodiments will now be described with reference to actions 5A-5E. It should be understood that actions may be performed in another order and that actions may be combined.

In action 5A, the client surfs, by means of the communication device 102, to the service provider's Internet site provided by the service provider node 101. The communication device 102 browses the different services offered on the Internet site, and selects one. The information presented about the offering may comprise data that the communication device 102 may use to split the service cost into a multitude of smaller costs each to be associated with an agreement.

The client may need to authenticate himself to the service provider. This may be done using well established procedures using e.g. the PKI infrastructure, and are therefore not described in more detail here. Typically, the communication device 102 provides the client's certificate to the service provider node 101, which verifies the certificate, and then runs a challenge-response sequence to verify that the client is the correct owner of the certificate.

The PKI infrastructure is then used by the service provider node 101 to establish a session key that may allow a confidential communication. In this confidential communication the client's communication device 102 may provide further information, such as a reference to the financial service provider node 103, and possibly information about the client's relation to the financial service provider node 103. However, this may only be necessary if the client has not earlier registered with the service provider node 101. In this confidential communication may also be established unique identifiers for the service provider node 101, the service, and the client's communication device 102, for the service session. Information sent here may be signed by the client's communication device 102 to prevent later repudiation attempts.

This action relates to actions 200-205, and 301.

In action 5B, the client's communication device 102 and the service provider's service provider node 101 agree on the minimum cost in each agreement, and the amount of service this corresponds to. The client's communication device 102 generates a signal S1 that expresses an agreement to consume the service for a small part of the entire scope or of an expected scope of the service.

As previously mentioned, the signal S1 may comprise one or more of the following: an identifier of the service provider and/or the service provider node 101; an identifier of the specific service; an identifier of the client and/or the client's communications device 102; an identifier of the financial service provider node 103 associated with the client; the amount that the client accepts to pay to the service provider for consumption of an agreed part of the service; a unique identifier, such as a sequence number, a time stamp, or a Cyclic Redundancy Check (CRC) over a previously received signal S1; and a digital signature that is calculated on all the above data.

This action relates to actions 204, 302 and 303.

In action 5C, the service provider delivers, by means of the service provide node 101, parts of the service to the communication device 102 in accordance with the agreement comprised in the received signal S1, while agreeing with the communication device 102 on upcoming parts.

This relates to actions 206 and 304.

For each point in time that precedes the end of an ongoing service delivery, the client generates, by means of the communication device 102, a new signal S1 that expresses an agreement to consume the service for a small part of the entire or expected scope of the service. This relates to action 5B.

In action 5D, at some point, possibly already during the service session, the service provider may, by means of the service provide node 101, provides one or more received signal S1 to the financial service provider node 103.

This relates to action 305.

In action 5E, the financial service provider node 103 may transfer the compensation the service provider node 101. In some embodiments, the financial service provider node 103 pays the amount specified in the signals S1 to the service provider node 101, and charges the client, via the client's communication device 102, with the same amount. This may be realised by the financial service provider node 103 paying the amount specified in the signals S1 to the service provider node 101, and charging the client's communication device 102 with the same amount.

This relates to actions 207, 208 and 306.

In some embodiments, the communication between the service provider node 101 and the financial service provider node 103 and/or the communication between the communication device 102 and the financial service provider node 103 is a secure communication. For example, the PKI infrastructure may be used to achieve confidentiality, integrity, and non-repudiation.

An advantage of embodiments according to Figure 5, given that the signal S1 cannot be repudiated at a later stage, is that neither the service provider nor the client needs to carry out any communication with the financial service provider node 103 before, or during the service session.

Another advantage, for the financial service provider node 103, is that the signal S1 is created by the client's communication device 102. The small, but still real, cost to create a signed signal is thus taken by the client.

In Figure 6, the signal S1 is created by the financial service provider node 103. The signal S1 may constitute the proof of a service agreement.

Embodiments exemplified with reference to Figure 6 correspond to embodiments exemplified with reference to Figure 5 except in that the signal S1 is created by the financial service provider node 103. Some embodiments will now be described with reference to actions 6A-6G. It should be understood that actions may be performed in another order and that actions may be combined.

In action 6A, by means of its communication device 102, the client buys a signal S1 from the financial service provider node 103. In other words, the communication device 102 sends a request for the signal S1 to the financial service provider 103.

In action 6B, the financial service provider node 103 receives the request, generates the signal S1 and transmits the signal S1 to the client's communication device 102.

In action 6C, the client surfs, by means of the communication device 102, to the service provider's Internet site provided by the service provider node 101. The communication device 102 browses the different services offered on the Internet site, and selects one. The information presented about the offering may comprise data that the communication device 102 may use to split the service cost into a multitude of smaller costs each to be associated with an agreement.

In some embodiments, the action 6C precedes the actions 6A and 6B described above. In such embodiments, by means of the communication device 102, the client may buy the signal S1 from the financial service provider node 103 according to the actions 6A and 6B in dependence of information about the service selected in the action 6C.

As previously described, the client may need to authenticate himself to the service provider.

This action relates to actions 200-205, and 301.

In action 6D, the client's communication device 102 transmits the signal S1 to the service provider node 101. As previously mentioned, the signal S1 expresses an agreement to consume the service for a small part of the entire scope or of an expected scope of the service.

This action relates to action 204.

In action 6E, the service provide node 101 delivers, by means of the service provide node 101, parts of the service to the communication device 102 in accordance with the agreement comprised in the received signal S1, while agreeing with the communication device 102 on upcoming service parts.

This relates to actions 206 and 304.

In action 6F, at some point, possibly already during the service session, the service provider may, by means of the service provide node 101, provide one or more received signals S1 to the financial service provider node 103.

This relates to action 305.

In action 6G, the financial service provider node 103 may transfer the compensation to the service provider node 101. In some embodiments, the financial service provider node 103 pays the amount specified in the signals S1 to the service provider node 101, and charges the client, via the client's communication device 102, with the same amount. This may be realised by the financial service provider node 103 paying the amount specified in the signals S1 to the service provider node 101, and charging the client's communication device 102 with the same amount.

This relates to actions 207, 208 and 306.

An advantage with embodiments according to Figure 6 as compared to embodiments exemplified with reference to Figure 5 is that the financial service provider node 103 may reserve the value of the signal S1 when the signal S1 is generated. This means that the service provider is guaranteed that the received signal S1 is backed up by a value.

In Figure 7, the signal S1 is created by the financial service provider node 103 and forwarded to the service provider's service provider node 101 by the financial service provider node 103. The signal S1 may constitute the proof of a service agreement.

Embodiments exemplified with reference to Figure 7 correspond to the embodiments exemplified with reference to Figure 6 except in that the signal S1 is sent from the financial service provider node 103 to the service provider node 101. Some embodiments will now be described with reference to actions 7A-7E. It should be understood that actions may be performed in another order and that actions may be combined.

In action 7A, the client surfs, by means of the communication device 102, to the service provider's Internet site provided by the service provider node 101. The communication device 102 browses the different services offered on the Internet site, and selects one. The information presented about the offering may comprise data that the communication device 102 may use to split the service cost into a multitude of smaller costs each to be associated with an agreement.

As previously described, the client may need to authenticate himself to the service provider.

This action relates to actions 200-205, and 301.

In action 7B, the client, by means of the client's communication device 102, instructs the financial service provider node 103 to transfer a compensation to the service provider's account. The compensation corresponds to the selected service part.

In action 7C, the financial service provider node 103 transfers the compensation from the client's account to the service provider's account.

In action 7D, the financial service provider node 103 informs the service provider node 101 that the compensation has been transferred. This may be realized, by the financial service provider node 103 generating the signal S1 and transmitting the signal S1 to the service provider node 101.

This action relates to actions 204', 207, 302, and 306.

In action 7E, the service provider delivers, by means of the service provide node 101, parts of the service to the communication device 102. The parts of the service are delivered in dependence of the received signal S1 and thus in dependence of the transferred compensation.

This action relates to actions 206 and 304.

An advantage with embodiments according to Figure 7 is that the signal S1 sent to the service provider node 101 from the financial service provider node 103 comprises an acknowledgement that the financial service provider node 103 has provided the compensation to the service provider's account. This means that neither the service provider node 101 nor the financial service provider node 103 needs to save the signals S1 in order to transfer the correct compensation to the service provider's account at a later stage.

Example 2: Embodiments comprising the variable cost per service part alternative.

Exemplifying embodiments comprising the variable cost per service part alternative will now be described in more detail.

In some embodiments, in order to enable a variable cost per service part alternative, a bidirectional communication is provided between the service provider node 101 and the client's communication device 102.

By means of the communication device 102, the client visits the service provider web site, selects the service, and a specific variant of it (if different variants exist).

The communication device 102 communicates the selection to the service provider's service provider node 101. This communication may be wrapped within a session involving authentication of one or both parties, and means for adding confidentiality and/or non-repudiation of the communication. The possible scope of the allowed variations, from both the client and the service provider perspective, may also be sent to the service provider node 101. In some embodiments, the scope of the allowed variations of the price may not exceed Y units, e.g. Y monetary units.

The service provider, by means of the service provider node 101, responds to the client's communication device 102 with an acceptance of the overall terms. Here may also information be provided necessary for the client to access/ initiate the media stream, and the payment stream (which may be run from two different servers on the providers side).

This information may be a Universal/Uniform Resource Locator (URL), a Service Data Point (SDP), or the like.

By means of the communication device 102, the client initiates the access to the service provider node 101. The protocol used by the service provider node 101 for delivering the media service to the client's communication device 102 may be any well-known protocol, such as a Service Request Transport Protocol (SRTP), Dynamic Adaptive Streaming over HyperText Transfer Protocol (HTTP) (DASH), HTTP Live Streaming (HLS), or any other protocol.

The client, by means of the communication device 102, initiates the "payment protocol" by sending the signal S1 to the service provider node 101.

As previously mentioned, the signal S1 comprises information identifying the service provider, the service provider node 101, the service, the service variant to be valid during the agreement, and the part cost paid for it. The signal S1 may include a digital signature by the client's communication device 102, if non-repudiation is part of the protocol. The signal S1 may be encrypted for confidentiality reasons. The signal S1 may also comprise information describing a change of the terms that has been used up until the current agreement, which then will be valid for this and upcoming agreements.

The service provider node 101 may return a response to the received signal S1. The signal S1 may be used by the service provider node 101 to announce that it will change the terms of the following agreements, and it may also comprise information describing the amount of service that the service provider nodes sees the received compensation to reward under the terms valid. It may also comprise information about the current "payment balance" as the service provider node 101 sees it, i.e. the difference between the accumulated cost parts received, and the amount of service provided.

The response sent from the service provider node 101 may comprise one or more of an identifier of the service provider, the service provider node 101, the specific service, the client, the client's communication device 102, the amount of service (with unit) the current signal S1 generates; the current differential amount of service (with unit) between the accumulated payment and the accumulated service provided, incl. the compensation comprised in the current signal S1; an identifier of the new agreement that will start to be valid from the accumulated service provided so far (if the different variants were described in the overall agreement, with associated identifiers, else the full description may have to be sent); and a digital signature that is calculated on all the above data.

The service flow and the compensation flow may then continue with the possible changes as described above. At some point the service flow and/or the compensation flow will be terminated. The service flow will be terminated when the service has come to its conclusion. The compensation flow may be terminated by the client's communication device 102 terminating the payment flow, which leads to a termination of the service flow. The service flow and/or the compensation flow may also be terminated by the service provider node 101 or by some protocol/technical/unknown error.

Embodiments herein do also relate to a computer program product for providing data packets relating to parts of a service to the communication device 102. The computer program product is loadable into a memory of a computerized device and comprises software code portions adapted to perform one or more of the actions described herein and/or to realize one or more of the features described herein.

Although the description above contains many specifics, they should not be construed as limiting but as merely providing illustrations of some presently preferred embodiments. The technology fully encompasses other embodiments which may become apparent to those skilled in the art. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for a device or method to address each and every problem sought to be solved by the described technology for it to be encompassed hereby.

When using the word "comprise" or "comprising" it shall be interpreted as non-limiting, in the meaning of "consist at least of".

When using the word action/actions it shall be interpreted broadly and not to imply that the actions have to be carried out in the order mentioned. Instead, the actions may be carried out in any suitable order other than the order mentioned. Further, some action/actions may be optional.

The embodiments herein are not limited to the above described examples. Various alternatives, modifications and equivalents may be used. Therefore, the above examples should not be taken as limiting the scope of the invention, which is defined by the appending claims.

**Claims**

1. A method in a service provider node (101) for transmitting data packets relating to parts of a service to a communication device (102), wherein the service provider node (101) and the communication device (102) are communicatively connected over a communications network (104) and comprised in a communications system (100), and wherein the method comprises:

- *receiving (205,302)* a signal (S1), which signal comprises an identifier of the communication device (102) requesting a service, an identifier of the requested service, and an agreement comprising information about a previously agreed part of the service; and
- *agreeing (303)* on an upcoming part of the service requested by the communication device (102), while *transmitting (206 304)* data packets relating to the previously agreed part of the service to the communication device (102), wherein the data packets are transmitted in dependence of the received signal (S1).

2. The method of claim 1, further comprising:

- *receiving (208, 306)* compensation from a financial service provider node (103), wherein the compensation corresponds to a cost associated with one or more received signals (S1).

3. The method of claim 1 or 2, wherein the *agreeing (303)* on the upcoming part while *transmitting (304)* the previously agreed part further comprises:

- continuously agreeing on the upcoming part of the service; and
- simultaneously transmitting data packets relating to the previously agreed part of the service to the communications device (102).

4. The method of any one of claim 1-3, wherein the agreeing (303) on the upcoming part of the service further comprises:

- receiving a request for the upcoming part of the service from the communication device (102), which request comprises a selected variant of the upcoming part of the service.

5. The method of any one of claim 1-3, wherein the *agreeing (303)* on the upcoming part of the service further comprises:

- receiving a request for the upcoming part of the service from the communication device (102);
- presenting a cost for the requested upcoming part to the communication device (102); and
- receiving an acceptance of the presented cost from the communication device (102).

6. The method of claim 5, wherein the cost for the requested upcoming part of the service varies in dependence of a quality of the requested upcoming part, a size of the requested upcoming part, a point in time for the requested upcoming part in relation to the total time for the service, and/or in dependence of a user of the communication device (102) requesting the upcoming part.

7. The method of any one of claim 2-6, wherein the *receiving (302)* the signal (S1) further comprises:

- receiving the signal (S1) from the communication device (102), and
wherein the method further comprises:
- *transmitting (305)* one or more received signals (S1) to the financial service provider node (103).

8. The method of any one of claim 2-6, wherein the *receiving (302)* the signal (S1) further comprises:

- receiving the signal (S1) from the financial service provider node (103), whereby the service provider node (101) is guaranteed that the received signal (S1) is backed up by a monetary value.

9. The method of any one of claim 2-8, wherein the received signal (S1) further comprises an identifier of the financial service provider node (103), an identifier of one or more previously received tokens and/or a digital signature generated based on the information comprised in the signal (S1).

10. The method of any one of claim 1-9, further comprising:

- *authenticating (301)* the communication device (102) and *establishing* a secure communication with the communication device (102) by
- receiving, from the communication device (102), a digital certificate generated by a certification node, (105) comprised in the communications system (100) and communicatively connected to the communications network (101);
- verifying the received digital certificate;
- verifying that a user of the communication device (102) is a correct owner of the digital certificate by running a challenge-response sequence; and
- establishing a secure communication to the communication device (102).

11. A service provider node (101) for transmitting data packets relating to parts of a service to a communication device (102), wherein the service provider node (101), and the communication device (102) are communicatively connected over a communications network (104) and comprised in a communications system (100), and wherein the service provider (101) comprises:

- a receiving circuit (401) configured to receive a signal (S1), which signal comprises an identifier of a communication device (102) requesting a service, an identifier of the requested service, and an agreement comprising information about a previously agreed part of the service; and
- an agreeing circuit (402) configured to agree on an upcoming part of the service requested by the communication device (102), while a transmitting circuit (403) comprised in the service provider node (101) transmits data packets relating to the previously agreed part of the service to the communication device (102) in dependence of the received signal (S1).

12. The service provider node (101) of claim 11, wherein the receiving circuit (401) further is configured to receive a compensation from a financial service provider node (103) connected to the communications network (104) and comprised in the communications system (100), wherein the compensation corresponds to a cost associated with one or more received signals (S1).

13. The service provider node (101) of claim 11 or 12, wherein the agreeing circuit (402) further is configured to continuously agree on an upcoming part of the service; and wherein the transmitting circuit (403) is configured to simultaneously transmit data packets relating to the previously agreed part of the service to the communication device (102).

14. The service provider node (101) of any one of claim 11-13, wherein the agreeing circuit (402) further is configured to:

- receive a request for the upcoming part of the service from the communication device (102), which request comprises a selected variant of the upcoming part of the service.

15. The service provider node (101) of any one of claim 11-13, wherein the agreeing circuit (402) further is configured to:

- receive a request for the upcoming part of the service from the communication device (102);
- present a cost for the requested upcoming part to the communication device (102); and
- receive an acceptance of the presented cost from the communication device (102).

16. The service provider node (101) of claim 15, wherein the cost for the requested upcoming part of the service varies in dependence of a quality of the requested upcoming part, a point in time for the requested upcoming part in relation to the total time for the service, and/or in dependence of a user of the communication device (102) requesting the upcoming part.

17. The service provider node (101) of any one of claim 12-16, wherein the receiving circuit (401) further is configured to:

- receive the signal (S1) from the communication device (102), and wherein the transmitting circuit (403) further is configured to:
- transmit one or more received signals to the financial service provider node (103).

18. The service provider node (101) of any one of claim 12-17, wherein the receiving circuit (401) further is configured to:

- receive the signal (S1) from the financial service provider node (103), whereby the service provider node (101) is guaranteed that the received signal (S1) is backed up by a monetary value.

19. The service provider node (101) of any one of claim 12-18, wherein the received signal (S1) further comprises an identifier of the financial service provider node (103), an identifier of one or more previously received signal (S1)

and/or a digital signature generated based on the information comprised in the signal (S1).

20. The service provider node (101) of any one of claim 11-19, further comprising:

- an authenticating and establishing circuit (404) configured to authenticate the communication device (102) and to establish (301) a secure communication with the communication device (102) by
- receiving, from the communication device (102), a digital certificate generated by a certification node (105) comprised in the communications system (100) and communicatively connected to the communications network (101);
- verifying the received digital certificate;
- verifying that a user of the communication device (102) is a correct owner of the digital certificate by running a challenge-response sequence; and
- establishing the secure communication to the communication device (102).

21. A computer program product for providing data packets relating to parts of a service to a communication device (102), wherein the computer program product is loadable into a memory of a computerized device and comprises software code portions adapted to perform one or more of the actions of one of more of the claims 1-10 and/or to realize one or more of the features of one or more of the claims 11-20.

FIG. 1

**Communication device, 102**        **Service provider node, 101**

200 Initial set-up

201 Request a part of a service

202 Present cost for the part

203 Send acceptance of cost

204 Send signal S1

205 Receive signal S1

206 Transmit data packets relating to the requested part of the service

208 Receive compensation

204' Send signal S1

207 Send compensation corr. to cost ass. with received signal S1

**Financial service provider node, 103**

FIG. 2

Start

301. Authenticate client and
establish secure communication

302. Receive a signal S1

303. Agree on an upcoming part of a service

304. Transmit data packets relating to a
previously agreed part of the service

305. Transmit one or more received
signals S1 to financial service
provider node

306. Receive compensation

End

FIG. 3

102

102

101 Service provider node

401
Receiving circuit

402
Agreeing circuit

403
Transmitting circuit

404
Authenticating and
establishing circuit

405 Processing circuit

406 Memory

FIG. 4

5A) Select Content, Authenticate, etc

5C) Stream of
Content

Service
Provider
Node 101

Client's
Comm.
Device 102

5B) Send
signal S1

5D) Send
signal S1

5E) Send
compensation

Financial Service
Provider Node 103

FIG. 5

6C) Select Content, authenticate, etc.

6E) Stream of Content

Service Provider Node 101

6D) Send signal S1

Client's Comm. Device 102

6A) Send request for signal S1

6G) Send compensation

6F) Send signal S1

6B) Send signal S1

Financial Service Provider Node 103

FIG. 6

FIG. 7

**EUROPEAN SEARCH REPORT**

Application Number

EP 12 16 6373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DI MODICA G ET AL: "Dynamic SLAs management in service oriented environments", JOURNAL OF SYSTEMS & SOFTWARE, ELSEVIER NORTH HOLLAND, NEW YORK, NY, US, vol. 82, no. 5, 1 May 2009 (2009-05-01), pages 759-771, XP026031133, ISSN: 0164-1212, DOI: 10.1016/J.JSS.2008.11.010 [retrieved on 2009-03-24] * figures 3,11 * * page 761 - page 763 * * page 764 - page 766 * * page 766 - page 767 * ----- | 1-21 | INV. G06Q30/06 |
| A | WO 2009/157830 A1 (ERICSSON TELEFON AB L M [SE]; LJUNGGREN ANDREAS [SE]; LIND MIKAEL [SE]) 30 December 2009 (2009-12-30) * paragraph [0044] - paragraph [0048] * ----- | 1-21 | |
| A | WO 2008/136713 A1 (ERICSSON TELEFON AB L M [SE]; MATTI MONA [SE]; LARSSON TONY [SE]; BJOE) 13 November 2008 (2008-11-13) * page 18, line 1 - line 11 * * page 20, line 5 - line 10 * ----- | 1-21 | **TECHNICAL FIELDS SEARCHED (IPC)** G06Q |

The present search report has been drawn up for all claims

| Place of search | Date of completion of the search | Examiner |
|---|---|---|
| The Hague | 1 October 2012 | Moser, Raimund |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**          EP 12 16 6373

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2012

| Patent document cited in search report | | Publication date | Patent family member(s) | | Publication date |
|---|---|---|---|---|---|
| WO 2009157830 | A1 | 30-12-2009 | EP | 2291768 A1 | 09-03-2011 |
|  |  |  | JP | 2011528140 A | 10-11-2011 |
|  |  |  | US | 2011145111 A1 | 16-06-2011 |
|  |  |  | WO | 2009157830 A1 | 30-12-2009 |
| WO 2008136713 | A1 | 13-11-2008 | GB | 2462752 A | 24-02-2010 |
|  |  |  | WO | 2008136713 A1 | 13-11-2008 |

EPO FORM P0459

For more details about this annex : see Official Journal of the European Patent Office, No. 12/82